# EUROPEAN PATENT APPLICATION

(11) **EP 0 779 485 A2**
(43) Date of publication of application: **18.06.1997**
(21) Application number: 96308880.2
(22) Date of filing: 06.12.1996
(51) Int. Cl.: F25D 23/12, B67D 1/00, G01F 23/296

(54) **Refrigerator with water dispenser**

(30) Priority: 12.12.1995 KR 9548773
(71) Applicant: Samsung Electronics Co., Ltd., Suwon City, Kyungki-do (KR)
(72) Inventor: Oh, Gil-Soo, Suwon-city, Kyungki-do (KR)
(74) Representative: Read, Matthew Charles

(57) **Abstract**

A refrigerator includes a water dispenser and is plumbed into the water main so that the water dispenser can be refilled without the refrigerator being opened. A sensor (36) is provided to detect the water level in a reservoir (50) of the water dispenser and a control system (100) opens a valve (34), in response to the water level falling below a threshold, to allow water to flow from the main into the reservoir.

## Description

The present invention relates to a refrigerator having a water dispenser, the water dispenser comprising a water receptacle located in a cooled region of the refrigerator.

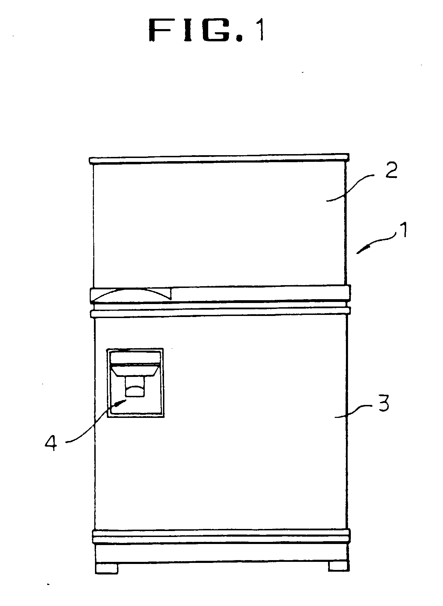

Figure 1 shows a known refrigerator which is provided with a water dispenser. The water dispenser in this example is arranged so that water can be obtained without opening the refrigerator.

Referring to Fig. 1, a main body 1 of this refrigerator comprises, at the front thereof, doors 2 and 3 for closing and opening a freezing compartment and a refrigerating compartment, respectively. The door 3 of the refrigerating compartment is provided with a water dispenser 4 at one side.

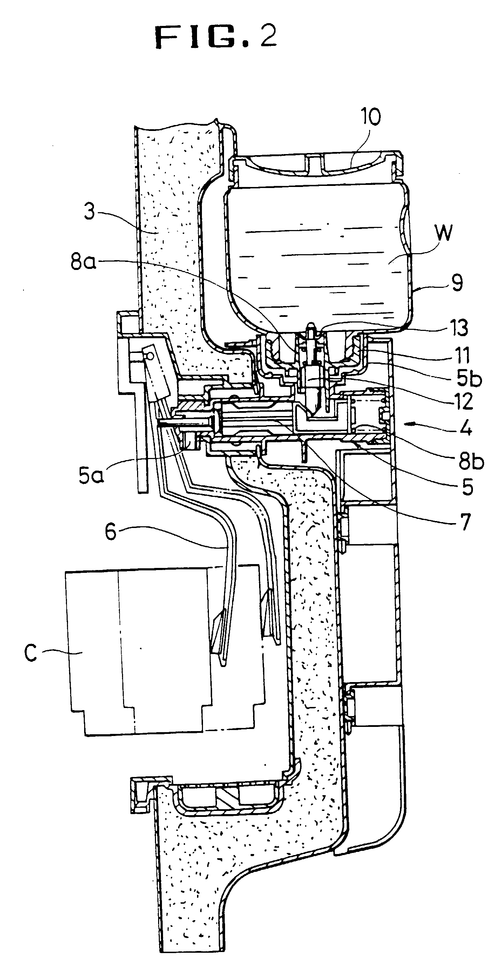

Referring to Fig. 2, the water dispenser 4 includes a water discharge outlet 5a for discharging the cold water from the recessed portion of the door 3, a cylinder 5 formed through the door 3, and a receiving portion 5b positioned over the cylinder 5. The cylinder 5 has a slide member 7 resiliently installed therein by means of a spring 8b, in which the slide member 7 is adapted to be horizontally slid by operation of a lever 6 hinged at the front portion of the door 3. The receiving portion 5b has a reservoir 9 for storing the cold water W positioned thereon.

The reservoir 9 has a cover 10 and a lower cap 11, coupled on upper and lower sides thereof respectively, and a valve body 12 resiliently installed by means of a spring 8a such that the reservoir 9 is able to ascend or descend according to the operation of the slide member 7. The valve body 12 has at its upper portion a valve plate 13 coupled thereto for controlling the flow of the cold water W by closing and opening the upper portion of the lower cap 11 in dependence on the ascending or descending operation of the valve body 13.

Thus, when the reservoir 9, containing a certain amount of the cold water, is placed in position within the receiving portion 5b, the lower part of the valve body 12 coupled to the inner side of the lower cap 11 descends, causing the upper portion of the lower cap 11 to be blocked. Accordingly, the cold water W in the reservoir 9 is no longer discharged.

At this time, the pivoting operation of the lever 6, caused by the placement of a cup below the water discharge outlet 5a, which is illustrated by the broken outline in the drawing, causes the slide member 7 to be withdrawn, resulting in the the valve body 12 ascending. Accordingly, the ascending of the valve plate 13 opens the upper portion of the lower cap 11 so that the cold water W can be discharged into the cup C by way of the lower cap 11, cylinder 5 and water discharge outlet 5a.

The known refrigerators suffer from the problem that the refrigerator must be opened so that water can be added manually to the reservoir.

It is an aim of the present invention to overcome the afore-mentioned problem of the prior art.

A refrigerator according to the present invention is characterised by detecting means for detecting the level of water in the receptacle and water supply means configured to respond to the detecting means to supply water to the receptacle.

Preferably, he detecting means comprises a non-contact sensor, for instance an ultrasonic sensor.

Preferably, the supply means includes filter means for filtering foreign substances from water to be supplied to the receptacle.

Advantageously, a receptacle detecting means is provided for detecting the presence of the water receptable in the location provided therefor. Consequently, the supply means can be disabled if the presence of the water receptacle is not being detected by the receptacle detecting means.

Preferably, the supply means operation exhibits hysteresis with respect to the detected water level.

Preferably, the location provided for the water receptacle is in a partitioned region which is cooled more than the bulk of said cooled region.

An embodiment of the present invention will now be described, by way of example, with reference to Figs. 3 to 5 of the accompanying drawings, in which:
Fig. 1 is a schematic vertical elevation showing a refrigerator having a conventional water dispenser;
Fig. 2 is a sectional view illustrating a conventional water filling apparatus for a refrigerator;
Fig. 3 is a schematic perspective view illustrating a refrigerator having a water filling apparatus according to the present invention;
Fig. 4 is a schematic sectional view showing a water filling apparatus with a door of the refrigerator of the present invention closed; and
Fig. 5 is a diagram showing a circuit for the water filling control apparatus according to the present invention.

The preferred embodiment according to the present invention will now be described in detail in accordance with the accompanying drawings.

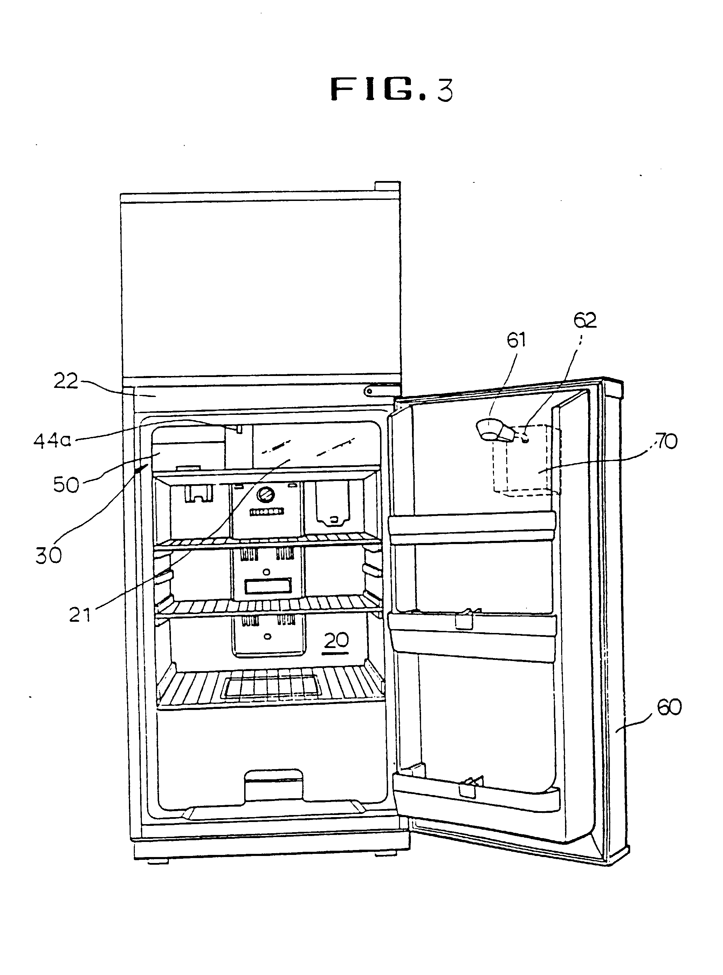

Fig. 3 is a perspective view showing a refrigerating compartment of the refrigerator having a water filling apparatus according to the present invention. The water filling apparatus according to the present invention has a water receptacle 50 placed in a space formed by partially partitioning the refrigerating compartment 20 which maintains the temperature just above the freezing point for foodstuffs, wherein a place, sometimes called a dedicated cooling chamber maintaining a relatively lower temperature than the refrigerating compartment 20, has another space 30 (hereinafter referred to as a receptacle receiving chamber) partitioned for placing the water receptacle 50.

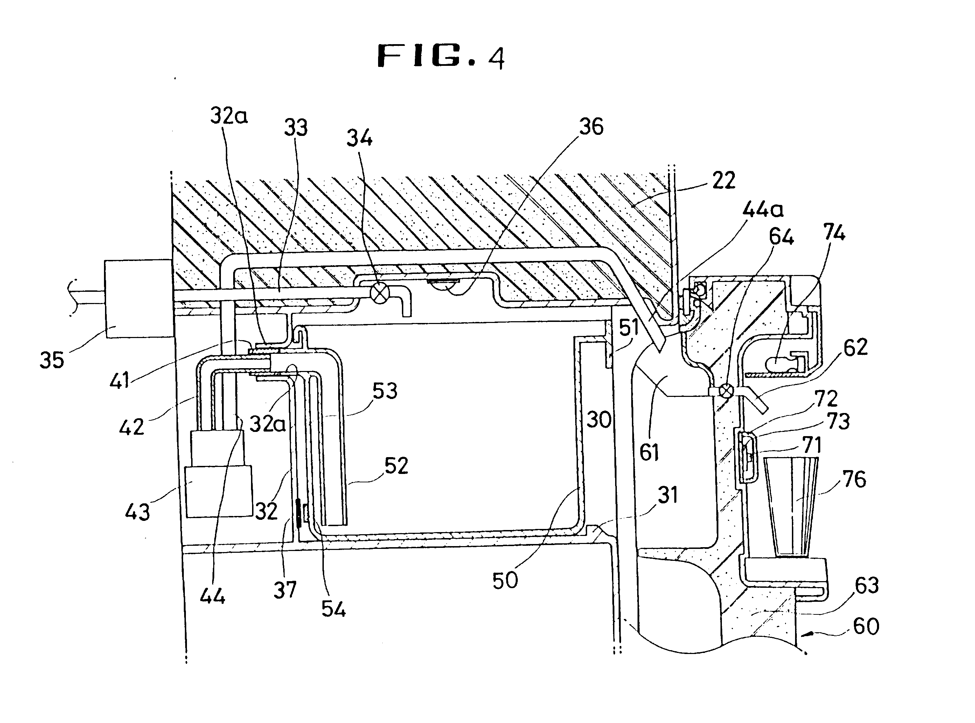

The receptacle receiving chamber 30 has an entrance provided at the predetermined position thereof with a projection 31 (see Fig. 4) which allows the received receptacle to be positioned in place. A horizontal separate wall 22 isolating the freezing compartment and the refrigerating compartment 20 has an outwardly extended free end 44a of a first discharge duct 44 connected to the discharge outlet of a motor pump 43 of which details will be discussed later.

The interior of the refrigerating compartment door 60 is provided with a water collecting cone 61 which is to be positioned below the free end 44a of the first discharge duct 44 when the refrigerating compartment door 60 is closed. The exterior of the refrigerating compartment door 60 has a recess therein as a water taking space 70 communicating with the water collecting cone 61 by means of a second discharge tube 62 through the refrigerating compartment door 60.

Fig. 4 schematically shows a sectional view of a water filling apparatus in accordance with the present invention, with the door of the refrigerator closed. As shown in Fig. 4, a generally box-shaped water receptacle 50 of the water filling apparatus has its top opened, and is configured to slide in the receptacle receiving chamber 30. A rear wall 53 of the water receptacle 50 is provided with an intake duct 52 thereon having its one end outwardly extended from the water receptacle 50 and over the rear wall 53 and another end extended to an inner bottom of the water receptacle 50 along the rear wall 53. Preferably, the intake duct 52 is formed integrally with the water receptacle 50.

Meanwhile, the receptacle receiving chamber 30 has a water discharge mechanical chamber 40 formed therein by a vertical wall 32 at the rear of the receptacle receiving chamber 30. And, on an upper portion of the vertical wall, is formed a connecting portion 32a projected towards the water discharge mechanical chamber 40. When the water receptacle 50 is seated in place within the receptacle receiving chamber 30, the intake duct 52 is closely fitted to a connecting portion 32a by forcedly inserting an inner circumference of the connecting portion 32a into an outer circumference of the intake duct 52. The connecting portion(i. e., an inner circumference of the connecting portion 32a and an outer circumference of the intake duct 52) preferably employs a suitable packing member(not shown) to prevent the leakage of the cold water. The rear wall 53 of the water receptacle 50 has at its predetermined position a permanent magnet 54 causing its magnetic force to close(or open) a lead contacting piece 37, which is installed at a position facing the permanent magnet 54 when the water receptacle 50 is properly seated within the receptacle receiving chamber 30. One may employ a microswitch as a water receptacle detecting sensor. Within the discharge mechanical chamber 40 is installed as a water discharge mechanism a motor pump 43 having an inlet connected to an inlet duct 42, which is also coupled to an end of the connecting portion 32a on the vertical wall 53 by means of the connecting duct 41. A discharge duct 44(hereinafter referred as a first discharge duct) connected to the discharge outlet of the motor pump 43 passes through a horizontal separate wall 22 isolating the freezing compartment and the refrigerating compartment, and the free end 44a of the first discharge duct 44 is positioned at a vertical upper portion of the water collecting cone 61.

Over an upper portion of the receptacle receiving chamber 30, is disposed a water supply duct 33 having its free end for connecting a water main and another end around which a solenoid valve 34 is installed. Furthermore, the water supply duct 33 outwardly extended from the body of the refrigerator is provided at its predetermined position with a water purifier for filtering foreign substances contained in the fresh water from the faucet. Also, over the upper portion of the receptacle receiving chamber 30 is positioned a water level detecting sensor 36 for detecting the level of the cold water stored in the water receptacle 50. Preferably, non-contact type sensor may be used as the water level detecting sensor 36, but an ultrasonic sensor can be employed for emitting the ultrasonic wave at a certain time intervals, measuring the time duration until after emitting waves, the reflected signal from the surface of the cold water is received, and deriving the water level based upon the measured time duration.

As mentioned above, the interior of the refrigerating compartment door 60 has at its predetermined position the water collecting cone 61, which is also positioned below the free end 44a of the first discharge duct 44 of the refrigerating compartment door 60 and serves to collect the cold water dropping through the first discharge duct 44. An outlet of the water collecting cone 61 is connected to a second discharge duct 62 which extends through an insulating wall 63 of the refrigerating compartment door 60 and into the water taking space 70. An installed solenoid valve 64 at the predetermined position of the second discharge duct 62 as a closing/opening member serves to prevent the external warm air from introducing into the refrigerating compartment 20 during which the water filling apparatus doesn't work. The water taking space 70 has on its rear surface a water feeding switch 71 fixedly supported on a separate auxiliary circuit board 73 from a main circuit board(not shown), which functions to be closed when an external pressure is applied thereto, thereby supplying a power to the motor pump 43. The water feeding switch 71 is covered with the protection as soft rubber, against water or foreign substances possibly causing the water feeding switch 71 to be ON. Also, the water taking space 70 has at its upper portion an illumination lamp 74, such that the space 70 can be viewed even in the absence of the illumination such as at night. In drawing, reference numeral 51 denotes a handle of the water receptacle 50, and 76 denotes a cup.

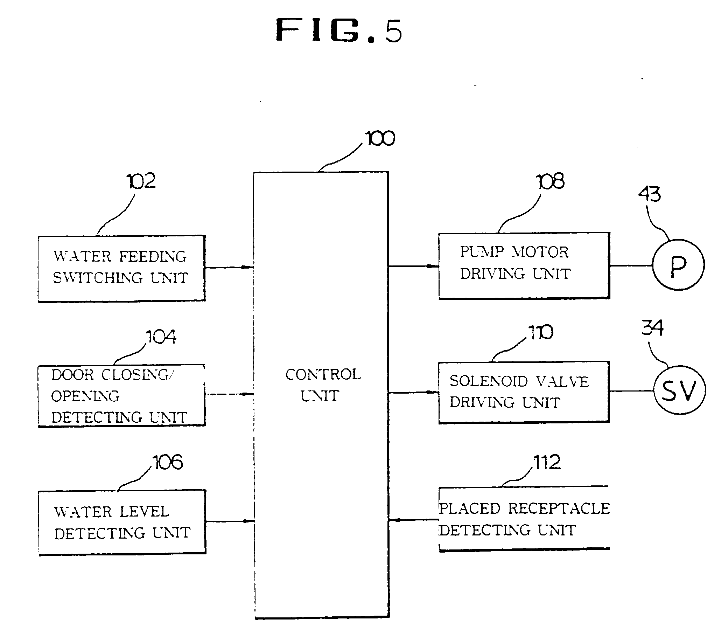

Fig 5 is a block diagram showing a control circuit for the water filling apparatus for the refrigerator. As shown in Fig. 5, a control circuit of the water filling apparatus for the refrigerator includes a control unit 100 for controlling a general operation of the water filling apparatus, a water feeding switching unit 102 for applying a water feed request to the control unit 100, a door closing/opening detecting unit 104 for detecting the closed or opened state of the refrigerating compartment door 60, a water level detecting unit 106 for detecting a water level of the cold water stored in the water receptacle 50, a placed receptacle detecting unit 112 for detecting whether or not the water receptacle is placed in position, a pump motor driving unit 108 for driving the motor pump 43, and a solenoid valve driving unit 110 for driving the solenoid valve 64 for controlling flow of the fresh water from the water main.

The control unit 100 preferably may comprise a microprocessor. The water feeding switching unit 102 may be embodied by the water feeding switch 71 and peripheral circuit components associated therewith. The door closing/opening detection unit 104 may be composed of door closing/opening sensing devices included in a conventional refrigerator. Each of the water level detecting unit 106 and the placed receptacle detecting unit 112 may comprise the foregoing water level detecting sensor 36 and the lead contacting piece 37. The control unit 100 may control, although not shown, the illumination lamp 74 and the solenoid valve 64 for blocking the external air.

The operation and advantages of the present invention will now be described in detail in accordance with the accompanying drawings.

The water receptacle 50 cleaned up by the user may be pushed into the receptacle receiving chamber 30 for placing the water receptacle 50 within the chamber 30, thus the produced pressure caused by the pushing of the water receptacle allows the intake inlet 52 to be coupled to the connecting portion 32a at the vertical wall. At this time, the complete coupling each other causes the permanent magnet 54 to close(or open) the lead contacting piece 37, such that the control unit 100 is informed that the water receptacle 50 is placed in position within the receptacle receiving chamber 30. The control unit 100 confirms the placement of the water receptacle 50 in position, and then controls to open the solenoid valve 34 to supply the tap water to the water receptacle 50. In this manner, the water receptacle 50 can be filled with the tap water, with the water level detecting sensor 36 serving to detect the water level at the predetermined intervals, and to provide the acquired information with the control unit 100. Based upon the received signal from the water level detecting sensor 36, the control unit 100 performs the determination of the water level, and closes the solenoid valve 34 to suspend supply of the tap water when the water level reaches the predetermined level.

When the filled water in the water receptacle 50 remains cooled, the user may press the water feeding switch 71. Then, the control unit 100 receives the signal from the water feeding switch 71 and activates the pump motor 43 to discharge the cold water. The discharge of the cold water may be effected by way of the sequential route as follows: intake inlet 52 → inlet duct 42 → motor pump 43 → first discharge duct 44 → water collecting cone 61 → second discharge duct 62. As the discharge of the cold water is repeated, the water level of the water receptacle 50 may be lowered below the predetermined level. The control unit 100 confirms this occurrence through the water level detecting sensor 36, if so, and then activates the solenoid valve 34 to fill the water receptacle with the purified tap water.

Although the present invention has been described in the context of a water filling apparatus for the refrigerator, one of ordinary skill in the art will recognize that the present invention may also be applied to means for supplying a defrosting water for use in the defroster for the refrigerator.

As described above, the water level of the cold water stored in the water receptacle can be detected and automatically filled as necessary. Therefore, the water filling apparatus of the present invention is able to always supply the cold water without filling of the tab water manually by the user, and without the leakage of the cold air.

## Claims

1. A refrigerator having a water dispenser (70), the water dispenser comprising a water receptacle (50) located in a cooled region (20) of the refrigerator, characterised by detecting means (36) for detecting the level of water in the receptacle and water supply means (33, 34, 100) configured to respond to the detecting means to supply water to the receptacle.

2. A refrigerator according to claim 1, wherein the detecting means comprises a non-contact sensor (36).

3. A refrigerator according to claim 2, wherein the non-contact sensor comprises an ultrasonic sensor (36).

4. A refrigerator according to claim 1, 2 or 3, wherein the supply means includes filter means for filtering foreign substances from water to be supplied to the receptacle.

5. A refrigerator according to any preceding claim, including a receptacle detecting means (37, 54, 112) for detecting the presence of the water receptable in the location provided therefor.

6. A refrigerator according to claim 5, wherein the supply means is disabled if the presence of the water receptacle is not being detected by the receptacle detecting means.

7. A refrigerator according to any preceding claim, wherein the supply means operation exhibits hysteresis with respect to the detected water level.

8. A refrigerator according to any preceding claim, wherein the location provided for the water receptacle is in a partitioned region (30) which is cooled more than the bulk of said cooled region.

9. An automatic water filling apparatus for use in a refrigerator employing a receptacle receiving chamber formed by partially partitioning a refrigerating compartment of the refrigerator to accomodate a water receptacle, the apparatus comprising:
water level detecting means for detecting water level of a cold water stored in the water receptacle;
a water feed duct coupled to a water main external to the refrigerator for supplying a tap water to the water receptacle;
a closing/opening valve installed on the water feed duct; and control means responsive to a sensing signal provided from the water level detecting means for determining the corresponding water level of the water receptacle.

10. The apparatus as defined in claim 9, wherein the water level detecting means comprises a non-contact type sensor for detecting the water level of the water receptacle without contacting cold water.

11. The apparatus as defined in claim 9, wherein the water level detecting means comprises an ultrasonic sensor.

12. The apparatus as defined in claim 9, wherein the water feed duct is provided on its one side with purifying means for filtering foreign substances contained in the tap water.

13. The apparatus as defined in claim 9, further comprising placed receptacle detecting means for detecting the placement of the water receptacle in position within the receptacle receiving chamber.

14. The apparatus as defined in claim 9, wherein the control means opens the closing/opening valve for supplying the tap water to the water receptacle at the water level of a lower limiting level, and closes the closing/opening valve to suspend supply of the tap water at the level of an upper limiting level.

15. The apparatus as defined in claim 9, wherein the control means responsive to the signal from the placed receptacle detecting means determines whether or not the water receptacle is placed in position, and controls to supply cold water only when the water receptacle is placed in position.

16. The apparatus as defined in claim 9, wherein the refrigerator further comprises a dedicated cooling chamber of a relatively lower temperature within the refrigerating compartment whereby the receptacle receiving chamber is formed by partially partitioning a dedicated cooling chamber.
